# EUROPEAN PATENT SPECIFICATION

(11) **EP 1 232 902 B1**
(45) Date of publication and mention of the grant of the patent: **15.08.2007**
(21) Application number: 02250704.0
(22) Date of filing: 01.02.2002
(51) Int. Cl.: B60N 2/28

(54) **Child safety seat**
Kindersicherheitssitz
Siège de sécurité pour enfants

(30) Priority: 17.02.2001 GB 0103983
(43) Date of publication of application: 21.08.2002
(73) Proprietor: BRITAX RÖMER Kindersicherheit GmbH, D-89024 Ulm (DE)
(72) Inventor: Wetter, Hermann, 89075 Ulm (DE)
(74) Representative: Ablett, Graham Keith

(56) References cited:
- EP-A- 0 323 334
- EP-A- 1 077 152
- EP-A- 1 110 806
- DE-A- 19 722 096
- DE-U- 29 513 774
- US-A- 5 810 435

## Description

This invention relates to child safety seat for use in a vehicle, comprising a base member adapted to rest on a vehicle seat and having an upwardly extending back portion adapted to abut against the backrest of the vehicle seat, first and second guide formations on the base member defining a first strap path for a vehicle seat belt lap strap, a third guide formation on the base member serving with one of said first and second guide formations to define a second strap path for a vehicle seat belt shoulder strap, and a seat assembly pivotally mounted on the base member for angular movement between a position of normal use a forward position further from said strap paths, and a strap-deflecting lever pivotally mounted on the base member adjacent to said third guide formation for angular movement from a first position clear of said second strap path to a second position in which a strap following said second strap path is deflected therefrom. A seat of this type is disclosed in DE-A-19722096.

To increase the effectiveness with which the child seat is held in place by the vehicle seat belt, it is desirable for the guide formations to be as far forward as feasible from the seat back of the vehicle seat. During installation, it is desirable for the first and second strap paths to be unobstructed so as to avoid the need to thread the vehicle seat belt along a convoluted path. EP-A-1077152 (published on 21 February 2001) discloses means for deflecting the lap strap clear of the seat body as it moves from its forward position to its normal position, thereby permitting the guide formations for the lap strap to be located in a forward position. It is an object of the invention enable guide for the shoulder strap to be in a similarly forward position.

According to the invention, a strap-deflecting lever pivotally mounted on the base member adjacent said third guide formation for angular movement, the strap deflecting lever having a formation for engaging with said seat assembly as it is pivoted rearwardly, to thereby move the strap-deflecting lever from a first position to a second position where said strap is deflected from said second strap path.

An embodiment of the invention will now be described, by way of example, with reference to the accompanying drawings, in which:
Figure 1 is a side view of a child safety seat with a strap deflecting means, not forming part of present invention, in its first position;
Figure 2 is a perspective view from the other side of the seat shown in Figure 1;
Figure 3 is a scrap plan view of the shoulder strap deflecting and clamping mechanism of the seat shown in Figures 1 and 2;
Figure 4 is a scrap plan view of a shoulder strap deflecting and clamping mechanism according to the present invention in a released position; and
Figure 5 is a scrap plan view of the mechanism shown in Figure 4, in the clamped position.

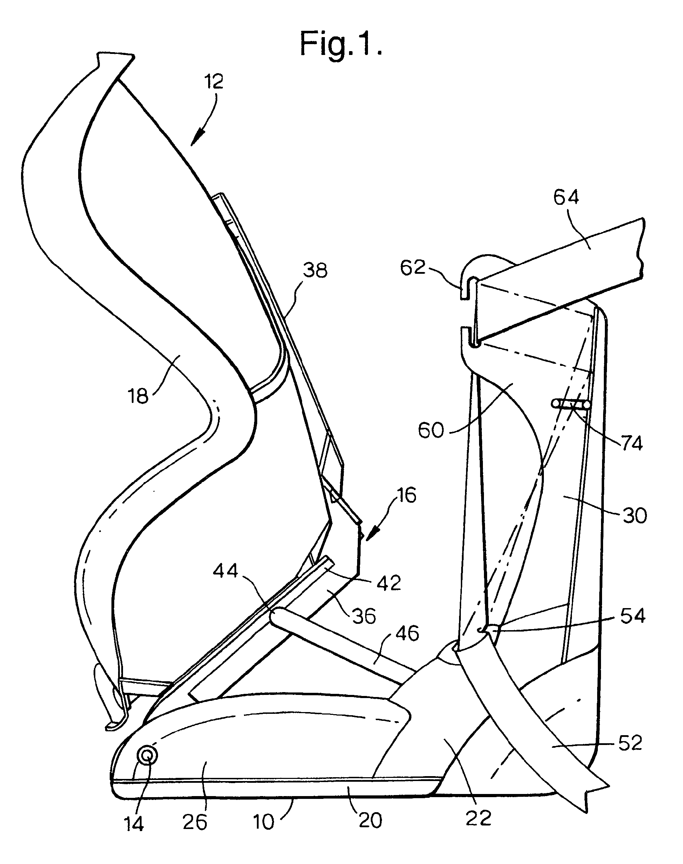

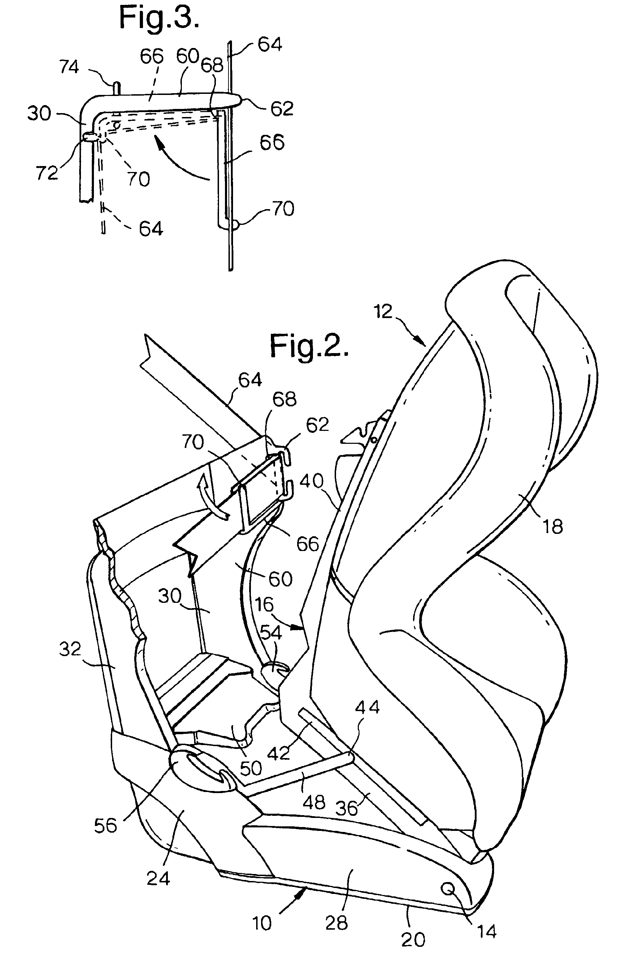

Referring to Figures 1 and 2, a child safety seat comprises a base member 10 and a seat assembly 12 which is coupled to the base member 10 by a pivot axle 14. The seat assembly 12 comprises an intermediate member 16, through which the axle 14 extends, and a seat body 18.

The base member 10 consists of a central horizontal portion 20 extending below the intermediate member 16 and two L-shaped side portions 22 and 24, extending upwardly from opposite sides of the central portion 20, with the intermediate member 16 located therebetween. The pivot axle 14 is journalled in forwardly extending limbs 26 and 28 of the side portions 22 and 24 which also have upwardly extending back limbs 30 and 32.

The intermediate member 16 is similar to the base member in that it has a base portion 36 extending under the seat body 18 and L-shaped side portions 38 and 40 extending upwardly between the sides of the seat body 18 and the L-shaped side portions 22 and 24 of the base member 10. The seat body 18 is mounted on the intermediate member 16 in the manner described in EP-A-0822115, which allows the orientation of the seat body 18 to be changed relative to that of the intermediate member 16.

The base portion 36 of the intermediate member contains an open-ended slot 42 extending longitudinally under the seat body 18. A transverse rod 44 is slidable along the slot 42 and has its ends connected to respective levers 46 and 48. The levers 46 and 48 are pivotally mounted on respective axially aligned stub axles (not shown) which extend inwardly from near the bottom of the back limbs 30 and 32 of the base member 10. The levers 46 and 48 are connected to a main belt deflector 50 (Figure 2) which is arranged to engage with the lap portion 52 (Figure 1) of a vehicle seat belt, to deflect it from a direct path between belt guides 54 and 56 on the side portions 22 and 24, as described in more detail in EP-A-1077152.

The upper end of the back limb 30 of the base member 10 has a forwardly extending projection 60 which has a belt guide 62 for the shoulder portion 64 of the vehicle seat belt. As can best be seen in Figure 3, a shoulder belt deflector 66 is mounted on a generally vertical pivot pin 68 located adjacent to and on the inboard side of the belt guide 62. The shoulder belt deflector 66 takes the form of a flat plate with a limb 70 extending from its bottom outer corner upwardly parallel to the pivot pin 68 so as to form an open topped U-shaped channel for receiving the shoulder belt portion 64. The shoulder belt deflector 66 is resiliently biassed by a spring (not shown) to a transverse position substantially at right angles to the projection 60 (as illustrated) and can pivot backwardly against the action of said spring to a clamping position (shown in dotted lines in Figure 3) in which it abuts the adjacent face of the projection 60 and the limb 70 abuts against a camming wedge 72 of the type described in EP-A-0200411. A manually operable catch 74 retains the shoulder belt deflector 66 in its clamping position.

In use, the child seat is positioned on a vehicle seat so that the central portion 20 of the base member 10 rests on the seat cushion and the back limbs 30 and 32 abut against the backrest. The seat body 18 and the intermediate member 16 are pivoted about the pivot axle 14 to the position shown in Figure 1. The V-shaped opening between the main belt deflector 50 and the levers 46 and 48 are now approximately level with the belt guides 54 and 56 on the base member 10.

Next, the seat belt 52, 64 for the vehicle seat is threaded over the belt guides 54 and 56 on the base member 10 and below the main belt deflector 50. The buckle (not shown) of the vehicle seat belt is then fastened and any slack in the lap portion 52 thereof pulled through to the shoulder portion 64. The shoulder belt deflector 66 is then moved to its clamping position so as to clamp the shoulder portion 64 between the limb 70 and the camming wedge 72 and the catch 74 is engaged, thus preventing further webbing being drawn off the retractor of the vehicle seat belt.

Finally, the seat body 18 and the intermediate member 16 are pivoted rearwardly. As described in EP-A-1077152, the rod 44 slides along the slot 42, pivoting the levers 46 and 48 clockwise (as viewed in Figure 2) so that the main belt deflector 50 moves downwardly on to the portion 52 of the seat belt between the guides 54 and 56 so as to deflect the lap portion 52 from its direct path between the guides 54 and 56 thereby tightening the vehicle seat belt.

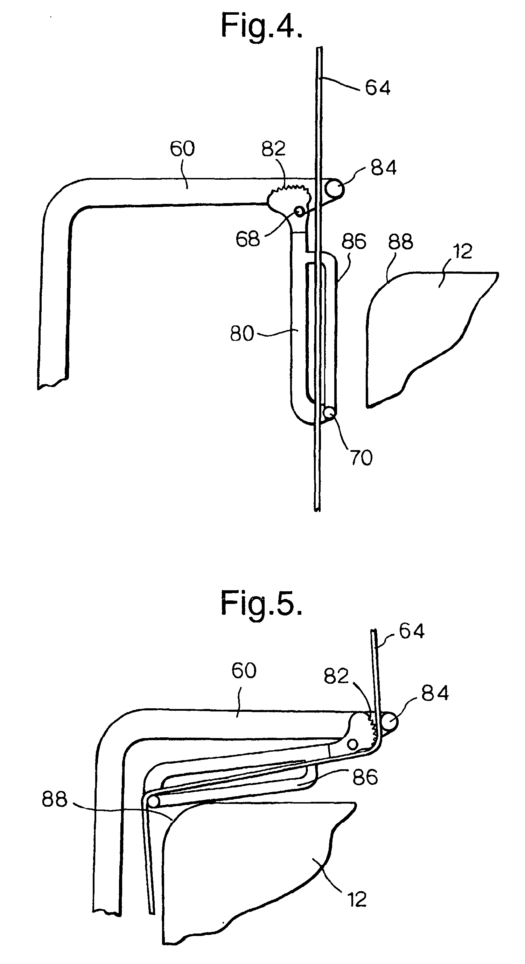

The belt deflector 66 of Figures 1 to 3 may be replaced by a belt deflector 80, according to the present invention, which is mounted on the pivot pin 68 as shown in Figures 4 and 5 and biased into the position shown in Figure 4 by a spring (not shown). A clamping cam 82 is formed on the inboard end of the belt deflector 80 and arranged to clamp the shoulder belt 64 against a pillar 84, as shown in Figure 5. The clamping cam 82 and pillar 84 also perform the function of the belt guide 62.

The belt deflector 80 also has a cam follower formation 86 extending below the path of the shoulder belt 64. In use, as the seat assembly 12 is pivoted rearwardly, a corner 88 thereof engages with the cam follower formation 86 to move the belt deflector 80 from the position shown in Figure 4 to the position shown in Figure 5. Consequently, it is not necessary to move the belt deflector to its clamping position manually or to provide a catch to retain it in its clamping position.

## Claims

1. A child safety seat for use in a vehicle, comprising a base member (10) adapted to rest on a vehicle seat and having an upwardly extending back portion adapted to abut against the backrest of the vehicle seat, first and second guide formations (54, 56) on the base member defining a first strap path for a vehicle seat belt lap strap, a third guide formation (62) on the base member serving with one of said first and second guide formations (54, 56) to define a second strap path for a vehicle seat belt shoulder strap, and a seat assembly (12) pivotally mounted on the base member (10) for angular movement between a position of normal use and a forward position further from said strap paths,
**characterized by** a strap-deflecting lever (80) pivotally mounted on the base member (10) adjacent said third guide formation (62) for angular movement, the strap deflecting lever (80) having a formation for engaging with said seat assembly (12) as it is pivoted rearwardly, to thereby move the strap-deflecting lever from a first position to a second position where said strap (64) is deflected from said second strap path.

2. A child safety seat according to any preceding claim, having a main belt deflector (50) pivotally mounted on the base member (10), and a coupling assembly linking the main belt deflector (50) to the seat assembly (12) so that angular movement of the seat assembly (12) relative to the base member (10) towards its position of normal use causes angular movement of the main belt deflector (50) from a first position clear of said first strap path to a second position in which a strap (52) following said first strap path is deflected therefrom, thereby tightening said strap (52).

## Patentansprüche

1. Kindersicherheitssitz zur Verwendung in einem Fahrzeug, mit
einem Grundelement (10) zum Aufliegen auf einem Fahrzeugsitz und mit einem sich nach oben hin erstreckenden Rückenteil zum Anliegen an der Rückenlehne des Fahrzeugsitzes.
ersten und zweiten Führungsstrukturen (54; 56) auf dem Grundelement, die einen ersten Gurtweg für einen Fahrzeugsitz-Beckengurt definiert,
einer dritten Führungsstruktur (62) auf dem Grundelement, die zusammen mit einer der ersten und zweiten Führungsstrukturen (54, 56) einen zweiten Gurtweg für einen Fahrzeugsitz-Schultergurt definiert und
eine drehbar auf dem Grundelement (10) angeordnete Sitzanordnung (12) zur Drehbewegung zwischen einer Position eines normalen Gebrauchs und einer nach vorne gerichteten, von den Gurtwegen entfernten Position,
**gekennzeichnet durch**
einen Gurt-umlenkenden Hebelarm (80), der für eine Drehbewegung drehbar auf dem Grundelement (10), an die dritte Führungsstruktur (62) angrenzend, angeornet ist, wobei der Gurt-umlenkende Hebelarm (80) eine Struktur zum Einrasten in die Sitzanordnung (12) beim Zurückschwenken aufweist, um **dadurch** den Gurt-umleitenden Hebelarm von einer ersten Position in eine zweite Position zu bewegen, in welcher der Gurt (64) von dem zweiten Gurtweg umgelenkt wird.

2. Kindersicherheitssitz nach einem der vorangehenden Ansprüche, mit einem Haupt-Gurtumlenker (50), der drehbar auf dem Grundelement (10) angeordnet ist, und einer Kupplungsanordnung, welche den Haupt-Gurtumlenker (50) mit der Sitzanordnung (12) verbindet, so dass eine Drehbewegung der Sitzanordnung (12) relativ zum Grundelement (10) zu ihrer Position des normalen Gebrauchs hin eine Drehbewegung des Haupt-Gurtumlenkers (50) von einer ersten Position frei von dem ersten Gurtweg zu einer zweiten Position bewirkt, in welcher ein Gurt (52), der dem ersten Gurtweg folgt, von diesem umgelenkt wird, wodurch der Gurt (52) festgezogen wird.

## Revendications

1. Siège de sécurité pour enfant destiné à être utilisé dans un véhicule, comprenant un élément de base (10) adapté à être placé sur un siège de véhicule et ayant une partie formant dossier s'étendant vers le haut adaptée à venir en appui contre le dossier du siège de véhicule, des première et seconde parties de guidage (54, 56) sur l'élément de base définissant un premier trajet de sangle pour une sangle abdominale de ceinture de sécurité de véhicule, une troisième partie de guidage (62) sur l'élément de base coopérant avec une desdites première et seconde parties de guidage (54, 56) pour définir un second trajet de sangle pour une sangle d'épaule de ceinture de sécurité de véhicule, et un ensemble formant siège (12) monté de façon pivotante sur l'élément de base (10) pour permettre un déplacement angulaire entre une position d'utilisation normale et une position vers l'avant située au-delà desdits trajets de sangle, **caractérisée en ce qu'**un levier de déviation de sangle (80) est monté de façon pivotante sur l'élément de base (10) de manière adjacente à ladite troisième partie de guidage (62) pour un déplacement angulaire, le levier de déviation de sangle (80) ayant une zone destinée à venir en prise avec ledit ensemble formant siège (12) lorsqu'il est pivoté vers, l'arrière, pour déplacer de ce fait le levier de déviation de sangle depuis une première position vers une seconde position dans laquelle ladite sangle (64) est déviée dudit second trajet de sangle.

2. Siège de sécurité pour enfant selon la revendication précédente, ayant un élément principal de déviation de ceinture (50) monté de façon pivotante sur l'élément de base (10), et un ensemble d'accouplement reliant l'élément principal de déviation de ceinture (50) à l'ensemble formant siège (12), de telle sorte que le déplacement angulaire de l'ensemble formant siège (12) par rapport à l'élément de base (10) vers sa position d'utilisation normale provoque un déplacement angulaire de l'élément principal de déviation de ceinture (50) depuis une première position écartée dudit premier trajet de sangle vers une seconde position dans laquelle une sangle (52) qui suit ledit premier trajet de sangle est dévié par rapport à lui, serrant de ce fait ladite sangle (52).
